# EUROPEAN PATENT SPECIFICATION

(11) **EP 1 645 590 B1**
(45) Date of publication and mention of the grant of the patent: **25.02.2009**
(21) Application number: 04425748.3
(22) Date of filing: 06.10.2004
(51) Int. Cl.: C08K 3/00, C08K 3/22, C08K 3/34, C08K 9/04, C09C 1/42

(54) **Process for making a flameproof coating for electric cables**
Verfahren zur Herstellung einer flammhemmenden Elektrokabelbeschichtung
Procédé de préparation d'un revêtement pour câbles électriques

(43) Date of publication of application: 12.04.2006
(73) Proprietor: Laviosa Chimica Mineraria S.p.A., 57123 Livorno (IT)
(72) Inventor: Della Porta, Cinzia, 56010 Ghezzano Pisa (IT); Ermini, Valentina, 57128 Livorno (IT)
(74) Representative: Celestino, Marco

(56) References cited:
- WO-A-00/68312
- US-A- 6 050 509
- US-A1- 2002 028 870
- US-B1- 6 235 533
- US-B1- 6 414 070

## Description

### Field of the invention

The present invention relates to a process for making a flameproof compound, in particular of the type comprising an inorganic flame retardant component in association to a nanocomposite obtained from the combination of a smectitic clay with a polymeric matrix.

### Description of the prior art

As well known many materials exist used as flame retardant for making linings for electric cables.

Among the materials normally used for this purpose, some polymers are known among olefins, such as polyethylene and polypropylene, or copolymers of olefins with vinyl monomers, such as vinyl acetate or ethyl acetate. For increasing the flame retardant properties, these polymers are usually mixed with halogenated additives, among which chlorine based polymers such as chlorosulfonated polyethylene, neoprene, polyvinylchloride, or the like.

However, materials containing halogenated compounds, in particular those containing chlorine, have some drawbacks. They in fact when burning, or in any case when they are heated up to a determined temperature, release toxic and highly corrosive substances such as hydrochloric acid or hydrobromic acid. The diffusion of these materials is therefore limited mainly for safety reasons.

Other substances with flame retardant properties, and in particular used for lining electric cables, are hydrated minerals, for example tri-hydrated alumina or magnesium hydroxide. In this case the flame retardant action is caused by a certain amount of water released when burning or superheating the material.

However, the processes for making this kind of material are complicated and expensive. Furthermore, for having a significant flame retardant effect it is necessary a high amount of hydrated mineral, thus affecting some characteristics of the final product, for example flexibility.

Some nanocomposite materials can solve the problems of the traditional above cited flame retardant materials. In particular, such nanocomposite materials have at least two components, where one is dispersed in the other at a nanometric scale (10-9m). They have a polymeric matrix in which inorganic particles (filler) of nanometric size (nanofiller) are completely dispersed. The high dispersion allows to obtain a consisting improvement of the characteristics of the compounds such as:
- tensile resistance,
- gas permeability,
- thermal stability,
- flame resistance,
- abrasion resistance and solvents resistance,
- combustion resistance.

In particular, thermal stability and flame resistance are increased, owing to a reduced heat release speed during the combustion and to a decrease of the temperature at which a fire can start (low speed of propagation of the fire). Flame resistance is caused by the production on the surface of the material of a carbonaceous layer, so-called "char". This is very compact and therefore reduces the gaseous exchanges between comburent (oxygen) and fuel. The carbonaceous layer is believed to act as a barrier, capable of reducing the heat and mass transfer between flames and polymer.

Flame retardant products exist comprising an inorganic flame retardant component in association to a nanocomposite obtained from the combination of a smectitic clay and a polymeric matrix. In particular, the a smectitic clays used for making nanocomposite materials are clays with a granulometry nanometric at least in one dimension of the particles of which they are made, so-called nanoclay.

The flame retardant materials above described have improved characteristics as described in US6750282 or in WO006665. However, the flame retardant properties of the material described are not optimal, since they may be improved concerning deformability, dripping, time of fire extinction, and other parameters for classifying flame retardant materials.

US 6050509 discloses a clay purification process for reducing the quantity of impurities recovered with the clay.

US 2002/028870 discloses a polymer-clay nanocomposite comprising a melt-processible matrix polymer and a layered clay having a quartz content less than 2% by weight.

US 6414070 teaches a flame retardant laminate comprising a reinforcing layer of woven or nonwoven polymer fabric, a layer of polymer and a layer of flame retardant nanocomposite comprising one polyolefine polymer and at least one modified clay.

WO 00/68312 discloses a flameproof polymer compositions in which organic halogen and phosphorus compounds are dispensed with since such substances release toxic and/or corrosive gases in the event of fire.

US 6235533 discloses determining a quantity of amorphous SiC2-containing impurities in a montmorillonite clay sample.

### Summary of the invention

It is therefore a feature of the present invention to provide a production process for making a coating for electric cables, which has improved characteristics with respect to the flame retardant materials of prior art.

This and other features are accomplished with one exemplary production process according to claim 1 comprising the steps of:
- dispersing a nanoclay in a polymeric matrix obtaining a nanocomposite;
- adding an inorganic flame retardant additive to the nanocomposite;
whose main feature is that the nanoclay is previously purified up to achieving a content of impurities less than 1% by weight.

Advantageously, the nanoclay is prepared through the following steps:
- mixing clayey material in a softened aqueous solution obtaining an aqueous dispersion;
- purifying the aqueous dispersion from the impurities obtaining a purified nanoclay;
- causing the purified nanoclay to react with an organic modifier obtaining an organophilic nanoclay;
- filtering the organophilic nanoclay;
- drying and grinding the organophilic nanoclay.

Advantageously, the step of purifying the aqueous dispersion comprises:
- a primary separation of the impurities from the aqueous dispersion by a vibro-sieve;
- a secondary separation of the impurities from the aqueous dispersion at the outlet of the vibro-sieve by a hydrocyclone;
- a decantation of the aqueous dispersion at the outlet of the hydrocyclone;
- a centrifugation at a high speed of the decanted aqueous dispersion.

In particular, the primary and secondary separations clean the nanoclay from macroscopic impurities such as sand and allow to reach a content of impurities less or equal to 9% by weight from about 13%. After the decantation the nanoclay has a content of impurities less or equal 4%. During this step is achieved the separation of the heavy particles of quartz and feldspar. Finally, at the end of the purification process above described and then at the outlet of the high speed centrifugation the nanoclay has a content of impurities less than 1% by weight owing to the removal of the light particles of quartz and cristobalite.

The combination of a highly purified nanoclay with an inorganic additive has a synergetic effect and provides a product with surprising flame retardant properties. In fact, the final purity of the nanoclay used to obtain the nanocomposite that is then combined with the inorganic additive assists the arrangement of the particles in a desired way.

Preferably, the filtering step the organophilic nanoclay provides the production of a sheet (or cake) on a filter, and then the step of washing the filtering sheet with hot water while it is still on the filter. In particular, the washing step is suitable for separating said nanoclay from by-products of said reaction with said organic modifier.

In particular, the by-products partially removed with the washing step comprise sodium chloride and organic modifier not reacted.

After the filtering step the content of sodium chloride is set between 60 and 30 mg/l.

In particular, the content of sodium chloride is set between 55 and 35 mg/l.

Preferably, the content of sodium chloride is set between 50 and 40 mg/l.

At the end of the filtering step the content of organic modifier not reacted is set between 120 and 30 mg/l.

In particular, after the filtering step the content of organic modifier not reacted is set between 110 and 40 mg/l.

Preferably, after the filtering step the content of organic modifier not reacted is set between 100 and 50 mg/l. Preferably, the clayey material is a smectitic clay selected from the group:
- montmorillonite,
- hectorite,
- saponite.

Preferably, the nanocomposite is obtained by mixing:
- from 1 to 10 parts by weight of a highly purified nanoclay;
- 100 parts by weight of a starting polymeric matrix.

Preferably, the nanocomposite comprises between 0 to 30 parts by weight of inorganic additive on 100 parts by weight of polymeric matrix.

In particular, the polymeric matrix can be selected from the group of polypropylene, polycarbonate, polystyrene, polyester, ABS, nylon, EVA, thermoplastic polyurethane.

Preferably, the inorganic flame retardant additive is selected from the group:
- aluminum hydroxide;
- magnesium oxide;
- magnesium hydroxide.

Preferably, the organic modifier is a material based on quaternary ammonium. For example, the organic modifier can be selected from the group of dimethyl ammonium chloride, benzyl dimethyl ammonium chloride, methyl dihydroxyethyl ammonium chloride.

The highly purified nanoclay obtained through the above described purification process has flame retardant properties remarkably higher than the traditional nanoclays, as shown by the following tables, where the results of a UL-94 test of vertical type are indicated.

### Brief description of the drawings

Further characteristics and the advantages of the process for making a flameproof compound will be made clearer with the following description of an exemplary embodiment thereof, exemplifying but not limitative, with reference to the attached drawings wherein:
- figure 1 shows diagrammatically a flow-sheet of the process for making a flameproof compound, according to the invention;
- figure 2 shows diagrammatically the steps followed for carrying out the UL-94 test of vertical type on test samples.

### Description of a preferred exemplary embodiment

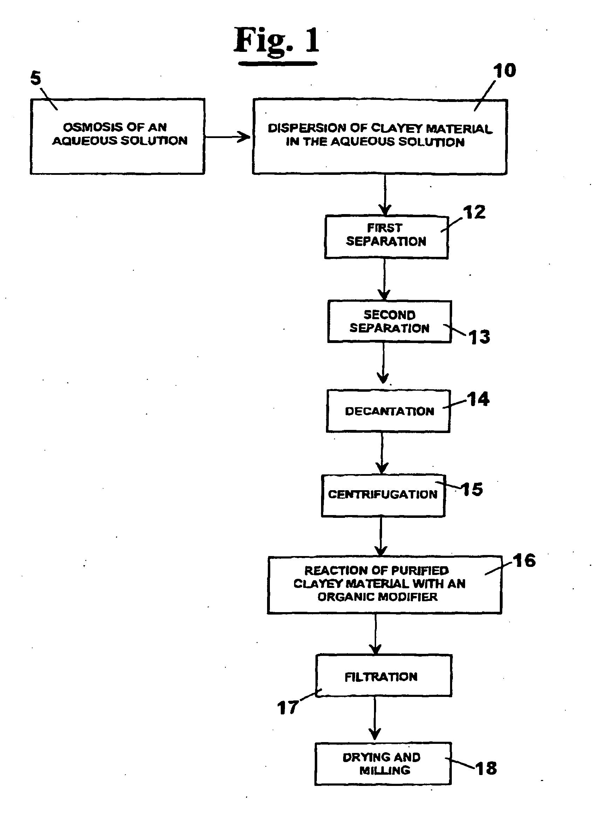

With reference to figure 1, the production process of a flameproof compound, according to the present invention, provides a preliminary step where a nanoclay obtained starting from a smectitic clay, for example montmorillonite, hectorite, saponite, is dispersed in a polymeric matrix in order to obtain a nanocomposite. The nanocomposite is then added to an inorganic flame retardant compound to obtain a flameproof product with improved characteristics with respect to similar products of prior art. This result is obtained undergoing the nanoclay to a purification process, described hereafter, suitable for reducing the content of impurities less than 1% by weight.

The nanoclay is prepared mixing the clayey material in an aqueous solution, previously softened by means of osmosis, obtaining an aqueous dispersion, block 10. In particular, during the osmosis of the aqueous solution its hardness is reduced through an ionic exchange during which Ca2+ and Mg2+ ions present in the aqueous solution are replaced with Na+ ions.

Then, the aqueous dispersion is purified from impurities obtaining a purified nanoclay, blocks from 12 to 15. In particular, the process for purifying the nanoclay is to reduce the impurities from about 13% by weight to a final content less than 1%. The purification process provides the following steps:
- a primary separation step of the impurities from the aqueous dispersion by a vibro-sieve for removing the macroscopic impurities such as sand, block 12;
- a secondary separation step of the impurities from the aqueous dispersion at the outlet of the vibro-sieve by a hydrocyclone for removing the impurities up to reducing its content to about 9%, block 13;
- a decantation of the aqueous dispersion at the outlet of the hydrocyclone up to reaching a content by weight of impurities less than 4% by weight, through the removal of heavy particles of quartz and feldspar, block 14;
- a centrifugation at a high speed of the aqueous decanted dispersion up to reaching a highly purified nanoclay with a content of impurities less than 1% by weight through the removal of light particles of quartz and cristobalite, block 15.

At the end of the purification process the nanoclay is caused to react with an organic modifier obtaining an organophilic nanoclay, block 16. In particular, the organic modifier can be dimethyl ammonium chloride, benzyl dimethyl ammonium chloride, methyl dihydroxyethyl ammonium chloride. This step provides dispersing the nanoclay in the polymeric matrix, so that the original hydrofobic nature owing to the presence of long alkylic chains is reduced.

Then, the organophilic nanoclay is subject to a filtering step, block 17, for example in a filter press, where the washing step with hot water of a sheet of filtered material is carried out. This way, the nanoclay is separated from the by-products of the reaction, in particular sodium chloride (which turns from a starting concentration of about 400 mg/l to a final concentration of about 40-50 mg/l and not reacted organic modifier (which turns from a concentration starting about 2000 mg/l to a final concentration of about 50-100 mg/l).

Finally, a drying and a following grinding of the organophilic nanoclay is carried out, which is then dispersed in a polymeric matrix obtaining a nanocomposite that is then added to a flame retardant inorganic compound.

### EXAMPLES and EXPERIMENTAL RESULTS

The results given hereafter have been obtained undergoing four samples of different compositions to a vertical type UL-94 test. In particular, samples 1 and 2 have been obtained using a highly purified nanoclay (De 72T) according to the invention, whereas samples 3 and 4 are flame retardant materials obtained with nanoclay (N1) of traditional type. The other elements making up the flameproof compound are aluminum hydroxide (ATH) as inorganic modifier and polypropylene (PP) as polymeric matrix. Between samples 1 and 2 or between samples 3 and 4 the ratio between nanoclay and polymeric matrix changes.

The table given hereafter shows the compositions of four samples subject to the test:

| | **Sample 1** | **Sample 2** | **Sample 3** | **Sample 4** |
|---|---|---|---|---|
| | % by weight | % by weight | % by weight | % by weight |
| PP | 77 | 75 | 77 | 75 |
| ATH | 20 | 20 | 20 | 20 |
| De 72T | 3 | 5 | | |
| N1 | | | 3 | 5 |

Each sample before being subject to the test has been extruded to obtain a test piece of tubular shape and then printed.

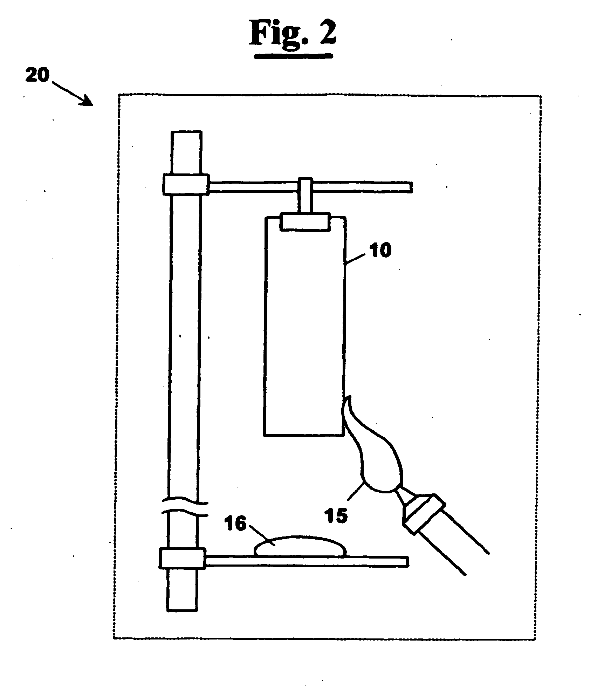

With reference to figure 2, as provided by the rules for vertical type UL-94 test, the sample tested 10 is located in vertical position with its lower portion in contact with flames 15 for a time of 10 seconds. After this time the sample 10 is withdrawn from the flames 15 for measuring its post-combustion time (t1). After the fire extinction on sample 10 the step above described is repeated for other 10 seconds and the time of post-combustion (t2) and the time of post-incandescence (t3) are determined. During the test it is observed whether at the time t1, t2 and t3 the sample "drips" (D) and causes the a cotton piece (BC) to burn, which is arranged at the bottom of the test chamber. A further parameter of is the combustion or the incandescence of the sample on the support (CIS). On the basis of the rule the samples subject to the test can be then classified as 94 V-2, 94 V-1, or 94 V-0 between samples with residua inflammability up to samples with substantially zero inflammability.

| **Sample 1** | | | | | | |
|---|---|---|---|---|---|---|
| **Sample** | **t1** | **t2** | **t2+t3** | **D** | **LW** | **CIS** |
| 1 | 0 | 1 | 1 | No | No | No |
| 2 | 0 | 1 | 1 | No | No | No |
| 3 | 0 | 2 | 2 | No | No | No |
| 4 | 0 | 1 | 1 | No | No | No |
| 5 | 0 | 3 | 3 | No | No | No |
| **CLASSIFICATION: 94 V-0** | | | | | | |

| **Sample 2** | | | | | | |
|---|---|---|---|---|---|---|
| **Sample** | **t1** | **t2** | **t2+t3** | **D** | **LW** | **CIS** |
| 1 | 0 | 1 | 1 | No | No | No |
| 2 | 0 | 2 | 2 | No | No | No |
| 3 | 0 | 2 | 2 | No | No | No |
| 4 | 0 | 1 | 1 | No | No | No |
| 5 | 0 | 2 | 2 | No | No | No |
| **CLASSIFICATION: 94 V-0** | | | | | | |

| **Sample 3** | | | | | | |
|---|---|---|---|---|---|---|
| **Sample** | **t1** | **t2** | **t2+t3** | **D** | **LW** | **CIS** |
| 1 | 25 | 7 | 3 | Si | Si | No |
| 2 | 1 | 20 | 5 | No | No | No |
| 3 | 7 | 9 | 2 | Si | Si | No |
| 4 | 15 | 29 | 4 | Si | Si | No |
| 5 | 1 | 1 | 27 | Si | Si | Si |
| **CLASSIFICATION: 94 V-2** | | | | | | |

| **Sample 4** | | | | | | |
|---|---|---|---|---|---|---|
| **Sample** 1 | **t1** 3 | **t2** 3 | **t2+t3** 3 | **D** Si | **LW** Si | **CIS** |
| 2 | 2 | 2 | 2 | Si | Si | No |
| 3 | 1 | 4 | 4 | Si | Si | No |
| 4 | 7 | 9 | 9 | Si | Si | si |
| 5 | 25 | 7 | 7 | Si | Si | No |
| **CLASSIFICATION: 94 V-2** | | | | | | |

As previously anticipated, using the highly purified nanoclay (samples 1 and 2) the resulting products show flame retardant properties remarkably improved than those of a common nanoclay. In particular, the flame retardant products with the highly purified nanoclay have been classified 94 V-0, whereas those with traditional nanoclay have been classified as 94 V-2. This shows a precise correlation existing between the purity of the nanoclay and the flame retardant properties.

## Claims

1. Process for making a flameproof compound comprising the steps of:
- dispersing a nanoclay in a polymeric matrix obtaining a nanocomposite;
- adding an inorganic flame retardant additive to the nanocomposite;
**characterised in that** said nanoclay is previously purified up to achieving a content of impurities less than 1% by weight.

2. Process for making a flameproof compound, according to claim 1, wherein said nanoclay is prepared through the following steps:
- mixing clayey material in a softened aqueous solution obtaining an aqueous dispersion;
- purifying said aqueous dispersion from the impurities obtaining a purified nanoclay;
- causing said purified nanoclay to react with an organic modifier obtaining an organophilic nanoclay;
- filtering said organophilic nanoclay;
- drying and grinding said organophilic nanoclay.

3. Process for making a flameproof compound, according to claim 2, wherein before said step of mixing there is a step of osmosis of said aqueous solution suitable for reducing its hardness obtaining a softened aqueous solution.

4. Process for making a flameproof compound, according to claim 2, wherein said step of purifying said aqueous dispersion comprises the steps of:
- a primary separation of the impurities from the aqueous dispersion by a vibro-sieve;
- a secondary separation of the impurities from the aqueous dispersion at the outlet of the vibro-sieve by a hydrocyclone;
- a decantation of the aqueous dispersion at the outlet of the hydrocyclone;
- a centrifugation at a high speed of the decanted aqueous dispersion up to reaching a content by weight of impurities less than 1% by weight.

5. Process for making a flameproof compound, according to claim 4, wherein after said secondary separation the content of impurities is less or equal to 9% by weight, after said decantation the content of impurities is less or the same as about the 4% by weight, after said centrifugation the content of impurities is less or equal 1% by weight.

6. Process for making a flameproof compound, according to claim 2, wherein said filtering step said organophilic nanoclay provides the production of a sheet (or cake) on a filter, and then the step of washing said sheet with hot water while it is still on said filter, said washing step being suitable for separating said nanoclay from by-products of said reaction, in particular from sodium chloride and organic modifier not reacted.

7. Process for making a flameproof compound, according to claim 6, wherein after said filtering step the content of sodium chloride is set between 60 and 30 mg/l, in particular the content of sodium chloride is set between 55 and 35 mg/l, preferably after said filtering step the content of sodium chloride is set between 50 and 40 mg/l.

8. Process for making a flameproof compound, according to claim 6, wherein after said filtering step the content of organic modifier not reacted is set between 120 and 30 mg/l, in particular after said filtering step the content of organic modifier not reacted is set between 110 and 40 mg/l, preferably after said filtering step the content of organic modifier not reacted is set between 100 and 50 mg/l.

9. Process, according to claim 2, wherein said clayey material is a smectitic clay selected from the group of:
- montmorillonite,
- hectorite,
- saponite.

10. Process, according to claim 1, wherein said nanocomposite is obtained by mixing:
- from 1 to 10 parts by weight of a highly purified nanoclay;
- 100 parts by weight of a starting polymeric matrix.

11. Process, according to claim 1, wherein said nanocomposite comprises between 0 to 30 parts by weight of inorganic additive on 100 parts by weight of starting polymeric matrix.

12. Process, according to claim 1, wherein said polymeric matrix is selected from the group of polypropylene, polycarbonate, polystyrene, polyester, ABS, nylon, EVA, thermoplastic polyurethane.

13. Process, according to claim 1, wherein said inorganic flame retardant additive is selected from the group:
- aluminum hydroxide;
- magnesium oxide;
- magnesium hydroxide.

14. Process, according to claim 2, wherein said organic modifier is a material based on quaternary ammonium, and in particular is selected from the group of dimethyl ammonium chloride, benzyl dimethyl ammonium chloride, methyl dihydroxyethyl ammonium chloride.

## Patentansprüche

1. Verfahren zur Herstellung einer Beschichtung für elektrische Kabel, das die folgenden Stufen umfasst:
- Bereitstellen eines Tonmaterials, das aus einem smektischen Ton besteht;
- Reinigen des Tonmaterials bis zur Gewinnung eines Nanoclays, wobei ein Gehalt an Verunreinigungen von weniger als 1 Gew.-% erreicht wird;
- Dispergieren des Nanoclays in einer Polymermatrix, wobei ein Nanokomposit erhalten wird;
- Zugabe eines anorganischen flammhemmenden Additivs zu dem Nanokomposit, wobei ein flammfestes Compound erhalten wird;
- Beschichten der elektrischen Kabel mit dem flammfesten Compound.

2. Verfahren zur Herstellung eines flammfesten Compounds nach Anspruch 1, wobei der Nanoclay durch die folgenden Stufen hergestellt wird:
- Einmischen von Tonmaterial in eine enthärtete wässrige Lösung, wobei eine wässrige Dispersion erhalten wird;
- Reinigen der wässrigen Dispersion von den Verunreinigungen, wobei ein gereinigter Nanoclay erhalten wird;
- Bewirken einer Reaktion des gereinigten Nanoclays mit einem organischen Modifizierungsmittel, wobei ein organophiler Nanoclay erhalten wird;
- Filtrieren des organophilen Nanoclays;
- Trocknen und Mahlen des organophilen Nanoclays.

3. Verfahren zur Herstellung eines flammfesten Compounds nach Anspruch 2, wobei vor der Stufe des Einmischens die Stufe einer Osmose der wässrigen Lösung, die zur Verringerung von deren Härte geeignet ist, erfolgt, wobei eine enthärtete wässrige Lösung erhalten wird.

4. Verfahren zur Herstellung eines flammfesten Compounds nach Anspruch 2, wobei die Stufe der Reinigung der wässrigen Dispersion die folgenden Stufen umfasst:
- eine erste Abtrennung der Verunreinigungen aus der wässrigen Dispersion durch ein vibrationssieb;
- eine zweite Abtrennung der Verunreinigungen aus der wässrigen Dispersion am Auslass des Vibrationssiebs durch einen Hydrozyklon;
- Abdekantieren der wässrigen Dispersion am Auslass des Hydrozyklons;
- Zentrifugieren der abdekantierten wässrigen Dispersion mit hoher Geschwindigkeit bis zum Erreichen eines Gewichtsgehalts an Verunreinigungen von weniger als 1 Gew.-%.

5. Verfahren zur Herstellung eines flammfesten Compounds nach Anspruch 4, wobei nach der zweiten Abtrennung der Gehalt an Verunreinigungen weniger als 9 Gew.-% oder 9 Gew.-% beträgt, nach dem Dekantieren der Gehalt an Verunreinigungen weniger als etwa 4 Gew.-% oder etwa 4 Gew.-% beträgt, nach dem Zentrifugieren der Gehalt an Verunreinigungen weniger als 1 Gew.-% oder 1 Gew.-% beträgt.

6. Verfahren zur Herstellung eines flammfesten Compounds nach Anspruch 2, wobei die Stufe des Filtrierens des organophilen Nanoclays die Bildung einer Lage (oder eines Kuchens) auf einem Filter liefert und die anschließende Stufe des Waschens der Lage mit heißem Wasser, während sie sich noch auf dem Filter befindet, dafür geeignet ist, den Nanoclay von Nebenprodukten der Reaktion, insbesondere von Natriumchlorid und nicht-umgesetztem organischem Modifizierungsmittel abzutrennen.

7. Verfahren zur Herstellung eines flammfesten Compounds nach Anspruch 6, wobei der Gehalt an Natriumchlorid nach der Filterstufe zwischen 60 und 30 mg/l, insbesondere der Gehalt an Natriumchlorid zwischen 55 und 35 mg/l, vorzugsweise der Gehalt an Natriumchlorid nach der Filterstufe zwischen 50 und 40 mg/l beträgt.

8. Verfahren zur Herstellung eines flammfesten Compounds nach Anspruch 6, wobei der Gehalt an nicht-umgesetztem organischem Modifizierungsmittel nach der Filterstufe zwischen 120 und 30 mg/l, insbesondere der Gehalt an nicht-umgesetztem organischem Modifizierungsmittel nach der Filterstufe zwischen 110 und 40 mg/l, vorzugsweise der Gehalt an nicht-umgesetztem organischem Modifizierungsmittel nach der Filterstufe zwischen 100 und 50 mg/l beträgt.

9. Verfahren nach Anspruch 2, wobei das Tonmaterial ein smektischer Ton ist, der aus der Gruppe von:
- Montmorillonit,
- Hektorit,
- Saponit ausgewählt ist.

10. Verfahren nach Anspruch 1, wobei der Nanokomposit durch Mischen von:
- 1 bis 10 Gewichtsteilen eines hoch gereinigten Nanoclays,
- 100 Gewichtsteilen einer Fausgangspolymermatrix erhalten wird.

11. Verfahren nach Anspruch 1, wobei der Nanokomposit zwischen 0 und 30 Gewichtsteile eines anorganischen Additivs auf 100 Gewichtsteile Ausgangspolymermatrix umfasst.

12. Verfahren nach Anspruch 1, wobei die Polymermatrix aus der Gruppe von Polypropylen, Polycarbonat, Polystyrol, Polyester, ABS, Nylon, EVA, thermoplastischem Polyurethan ausgewählt ist.

13. Verfahren nach Anspruch 1, wobei das anorganische flammhemmende Additiv aus der Gruppe von:
- Aluminiumhydroxid,
- Magnesiumoxid,
- Magnesiumhydroxid ausgewählt ist.

14. Verfahren nach Anspruch 2, wobei das organische Modifizierungsmittel ein Material auf der Basis eines quaternären Ammoniums ist und insbesondere aus der Gruppe von Dimethylammoniumchlorid, Benzyldimethylammoniumchlorid, Methyldihydroxyethylammoniumchlorid ausgewählt ist.

## Revendications

1. Procédé de préparation d'un revêtement pour câbles électriques comprenant les étapes suivantes :
- fournir une matière argileuse composée d'une argile smectique
- purifier ladite matière argileuse jusqu'à obtenir une nanoargile présentant une teneur en impuretés inférieure à 1 % en poids
- disperser ladite nanoargile dans une matrice polymère pour obtenir un nanocomposite ;
- ajouter un additif inorganique ignifugeant au nanocomposite pour obtenir un composé résistant au feu ;
- enduire lesdits câbles électriques avec ledit composé résistant au feu.

2. Procédé de préparation d'un composé résistant au feu selon la revendication 1, dans lequel ladite nanoargile est préparée par les étapes suivantes :
- mélanger la matière argileuse dans une solution aqueuse adoucie pour obtenir une dispersion aqueuse ;
- purifier ladite dispersion aqueuse des impuretés pour obtenir une nanoargile purifiée ;
- amener ladite nanoargile purifiée à réagir avec un modificateur organique pour obtenir une nanoargile organophile ;
- filtrer ladite nanoargile organophile ;
- sécher et broyer ladite nanoargile organophile.

3. Procédé de préparation d'un composé résistant au feu selon la revendication 2, dans lequel, avant ladite étape de mélange, il y a une étape d'osmose de ladite solution aqueuse appropriée pour réduire sa dureté pour obtenir une solution aqueuse adoucie.

4. Procédé de préparation d'un composé résistant au feu selon la revendication 2, dans lequel ladite étape de purification de ladite dispersion aqueuse comprend les étapes suivantes :
- une séparation primaire des impuretés de la dispersion aqueuse par un crible vibrant ;
- une séparation secondaire des impuretés de la dispersion aqueuse à la sortie du crible vibrant par un hydrocyclone ;
- une décantation de la dispersion aqueuse à la sortie de l'hydrocyclone ;
- une centrifugation à vitesse élevée de la dispersion aqueuse décantée jusqu'à atteindre une teneur en poids d'impuretés inférieure à 1 % en poids.

5. Procédé de préparation d'un composé résistant au feu selon la revendication 4, dans lequel, après ladite séparation secondaire, la teneur en impuretés est inférieure ou égale à 9 % en poids, après ladite décantation, la teneur en impuretés est inférieure ou égale à environ 4 % en poids, après ladite centrifugation, la teneur en impuretés est inférieure ou égale à 1 % en poids.

6. Procédé de préparation d'un composé résistant au feu selon la revendication 2, dans lequel ladite étape de filtration de ladite nanoargile organophile permet la production d'une feuille (ou d'un gâteau) sur un filtre, puis l'étape de lavage de ladite feuille avec de l'eau chaude alors qu'elle est encore sur ledit filtre, ladite étape de lavage étant appropriée pour séparer ladite nanoargile des sous-produits de ladite réaction, en particulier du chlorure de sodium et du modificateur organique n'ayant pas réagi.

7. Procédé de préparation d'un composé résistant au feu selon la revendication 6, dans lequel, après ladite étape de filtration, la teneur en chlorure de sodium est située entre 60 et 30 mg/L, en particulier la teneur en chlorure de sodium est située entre 55 et 35 mg/L, de préférence après ladite étape de filtration, la teneur en chlorure de sodium est située entre 50 et 40 mg/L.

8. Procédé de préparation d'un composé résistant au feu selon la revendication 6, dans lequel, après ladite étape de filtration, la teneur en modificateur organique n'ayant pas réagi est située entre 120 et 30 mg/L, en particulier après ladite étape de filtration, la teneur en modificateur organique n'ayant pas réagi est située entre 110 et 40 mg/L, de préférence après ladite étape de filtration, la teneur en modificateur organique n'ayant pas réagi est située entre 100 et 50 mg/L.

9. Procédé selon la revendication 2, dans lequel ladite matière argileuse est une argile smectique choisie dans le groupe constitué par :
- la montmorillonite,
- l'hectorite,
- la saponite.

10. Procédé selon la revendication 1, dans lequel ledit nanocomposite est obtenu en mélangeant :
- 1 à 10 parties en poids d'une nanoargile hautement purifiée ;
- 100 parties en poids d'une matrice polymère de départ.

11. Procédé selon la revendication 1, dans lequel ledit nanocomposite comprend entre 0 et 30 parties en poids d'un additif inorganique par rapport à 100 parties en poids de la matrice polymère de départ.

12. Procédé selon la revendication 1, dans lequel ladite matrice polymère est choisie dans le groupe constitué par un polypropylène, un polycarbonate, un polystyrène, un polyester, un ABS, un nylon, un EVA, un polyuréthane thermoplastique.

13. Procédé selon la revendication 1, dans lequel ledit additif inorganique ignifugeant est choisi dans le groupe constitué par :
- l'hydroxyde d'aluminium ;
- l'oxyde de magnésium ;
- l'hydroxyde de magnésium.

14. Procédé selon la revendication 2, dans lequel ledit modificateur organique est une substance à base d'ammonium quaternaire et est choisi, en particulier, dans le groupe constitué par le chlorure de diméthyl ammonium, le chlorure de benzyl diméthyl ammonium, le chlorure de méthyl dihydroxyéthyl ammonium.
